# EUROPÄISCHE PATENTANMELDUNG

(11) **EP 3 981 498 A1**
(43) Veröffentlichungstag der Anmeldung: **13.04.2022**
(21) Anmeldenummer: 20201345.4
(22) Anmeldetag: 12.10.2020
(51) Int. Cl.: B01D 53/04, B01D 53/72

(54) **VERFAHREN ZUR REINIGUNG EINES GASGEMISCHES DURCH OZONZUGABE**

(71) Anmelder: Hitachi Zosen Inova AG, 8005 Zürich (CH)
(72) Erfinder: JORDAN, Uwe, 27726 Worpswede (DE); HACK, Gamuret, 8057 Zürich (CH); VÖLLMY, Lukas, 8408 Winterthur (CH)
(74) Vertreter: Schaad, Balass, Menzl & Partner AG

(57) **Zusammenfassung**

Die Erfindung beschreibt ein Verfahren zur Reinigung eines Gasgemisches, das ein durch Pyrolyse von organischem Material erhaltenes Pyrolysegas mit einer Kohlenstoffmonoxid-Konzentration von mindestens 2 vol.-% und/oder ein durch Vergärung von organischem Material erhaltenes methanhaltiges Biogas mit einer Methan-Konzentration von mindestens 40 vol.-%, sowie mindestens eine Verunreinigung aus der Gruppe der flüchtigen organischen Verbindungen (VOC)enthält und zur Abtrennung der VOC mit einem Adsorber (19) in Kontakt gebracht wird. Erfindungsgemäss wird dem Gasgemisch (3) vor dem Inkontaktbringen mit dem Adsorber (19) Ozon (O₃) beigemischt.

## Beschreibung

Die vorliegende Erfindung betrifft im Allgemeinen ein Verfahren zur Reinigung eines durch Pyrolyse oder Vergärung von organischem Material erhaltenes Gasgemisches, insbesondere durch Entfernung schädlicher Komponenten wie flüchtige organische Verbindungen (VOC), durch Oxidation mit Ozon und durch Adsorption an einem Adsorber.

Die Reinigung von Gasgemischen durch Einsatz von geeigneten Adsorbern ist sowohl bei der Reinigung industrieller Abgase als auch in der Haustechnik, beispielsweise in Dunstabzugshauben, bekannt. Durch Anlagerung an die innere Oberfläche poröser Adsorbermaterialien werden Luftschadstoffe, insbesondere Kohlenwasserstoffe, aus dem zu reinigenden Abgas entfernt. Man kann Festbett-, Wanderbett-, Rotor-, Wirbelbett- und Flugstrom-Adsorber unterscheiden. In mehrstufigen Abgasreinigungsanlagen werden Adsorber oftmals auch als finale Reinigungsstufe, als sogenannte Polizeifilter, eingesetzt.

Ein wichtiges Anwendungsgebiet der Gasreinigung ist die Reinigung methanhaltiger Gasgemische ("Biogas"), die neben dem verwertbaren Methan meist eine grosse Anzahl weiterer gasförmiger Verbindungen umfassen. Methanhaltiges Biogas kann etwa aus Fermentern oder Deponien stammen, oder nicht fermentativen Ursprungs sein, beispielsweise in Form von Erdgas, Grubengas oder Flözgas. Um solche methanhaltigen Gasgemische - nachfolgend Biogase genannt - für die Energiegewinnung nutzbar zu machen, muss die Methankonzentration im Gasgemisch durch Entfernung möglichst aller anderen Verbindungen (sog. Verunreinigungen) gesteigert werden.

Ein weiteres wichtiges Anwendungsgebiet der Gasreinigung ist die Reinigung von durch Pyrolyse erhaltener Gasgemische, die in der Regel einen nennenswerten Anteil von Kohlenstoffmonoxid enthalten.

Im Biogas oder Pyrolysegas üblicherweise enthaltene Bestandteile oder Verunreinigungen sind beispielsweise, Schwefelwasserstoff (H₂S), Ammoniak (NH₃) und flüchtige organische Verbindungen (englisch: "volatile organic compounds", kurz VOC), wie z.B. Schwefelkohlenwasserstoffe (S-KW). Die Verunreinigungen können heutzutage mithilfe verschiedener biologischer, chemischer und physikalischer Prozesse abgetrennt werden können, was generell als "(Bio- )Gasaufbereitung" bezeichnet wird. Verbindungen mit hohem Siedepunkt können etwa durch Adsorption, beispielsweise an einem Aktivkohlefilter, abgetrennt werden, während Verbindungen mit niedrigem Siedepunkt beispielsweise durch Kondensation und wasserlösliche Verbindungen mittels eines Wäschers entfernt werden können.

Die EP 1979446 B1 offenbart ein Verfahren zur Gewinnung von Methan aus einem Deponiegas und Gas aus anderen anaeroben Fermentern. Das Verfahren umfasst dabei die folgenden Schritte: Entfernen von H₂S, Komprimierung, anschliessendes Entfernen von VOC und Wasser und abschliessend Entfernen von weiteren Verunreinigungen.

Je nach Anzahl und Art der Verunreinigungen gestalten sich die einzelnen Schritte der Biogasaufbereitung als mehr oder weniger aufwändig. Neben der Abscheidung von Kondensaten wie z.B. Ammoniak stehen insbesondere die Entfernung von Schwefelverbindungen und sogenannten VOC im Vordergrund.

Eine Entschwefelung - d.h. die Entfernung von H₂S und S-KW - von Biogas oder Pyrolysegas ist im Hinblick auf eine industrielle Nutzung, z.B. als Brenngas, oftmals unumgänglich, da Schwefelverbindungen zu Schwefelsäure reagieren und z.B. Korrosion an den Leitungen verursachen können. Korrosionsempfindliche Anlagen wie Brennstoffzellen stellen daher im Vergleich zu Motoren und Turbinen deutlich höhere Anforderungen an den Schwefelgehalt im Brenngas. Je nach Anwendungsgebiet muss der Schwefelgehalt im Brenngas auf wenige ppmv (parts per million by volume) reduziert werden oder es müssen sogar alle Spurenkomponenten bis auf 100 ppbv (parts per billion by volume) aus dem Gasstrom abgetrennt werden. Im Rahmen der Entschwefelung wird üblicherweise zunächst H₂S entfernt und in einem zweiten Schritt erfolgt die Abtrennung von Schwefelkohlenwasserstoffen (S-KW). Die H₂S-Entfernung geschieht in der Regel mittels Adsorption an speziell dotierter Aktivkohle, wobei auch der Einsatz biologischer oder chemischer Verfahren möglich ist. Ein weiterer Aktivkohlefilter kann zum Zwecke der sogenannten Feinentschwefelung nachgeschaltet werden. Für die anschliessende Abtrennung von S-KW wird in der Regel ein normaler Aktivkohlefilter eingesetzt.

Neben der Entfernung von Schwefelkomponenten ist auch die Entfernung von VOC ein wichtiger Bestandteil der Gasaufbereitung von Gasgemischen aus der Pyrolyse oder Vergärung von organischem Material. VOC ist eine Sammelbezeichnung für organische - also kohlenstoffhaltige Stoffe - die bei Raumtemperatur oder höheren Temperaturen durch Verdampfen (umgangssprachlich "Verdunsten") in die Gasphase übergehen, also flüchtig sind. Beispiele für VOC sind Terpene, Ketone, Amine, Aldehyde, Schwefelhaltige Kohlenwasserstoffe und weitere. Methan (CH₄) ist kein Bestandteil der VOC. Die genaue Definition für VOC ist je nach Land und Region unterschiedlich: Die WHO definiert VOC als "alle organischen Verbindungen mit Siedepunkten im Bereich von 50 bis 260°C, mit Ausnahme von Pestiziden". In der Schweiz gelten gemäss der *Verordnung über die Lenkungsabgabe auf flüchtigen organischen Verbindungen (VOCV)* vom 12. November 1997 als VOC "organische Verbindungen mit einem Dampfdruck von mindestens 0,1 mbar bei 20°C oder mit einem Siedepunkt von höchstens 240°C bei 1013,25 mbar". Europa wiederum definiert VOC gemäss der Richtlinie 1999/13/EG, Richtlinie 2001/81/EG, Richtlinie 2004/42/EG und Richtlinie 2008/50/EG. Die DIN EN ISO 16000-6 definiert VOC als "alle Stoffe, die im Gaschromatogramm zwischen und inklusive n-Hexan und n-Hexadecan auftreten. Im Gaschromatogramm früher auftretende Stoffe gelten als VVOC (very volatile organic compounds) und später auftretende Stoffe gelten als SVOC (semi-volatile organic compounds)".

Im Rahmen der vorliegenden Anmeldung wird die in der Schweiz geltende Definition verwendet. VOC werden weiter in "grössere" bzw. "schwerere" und "kleinere" bzw. "leichtere" VOC unterteilt je nachdem, ob sie einen höheren Siedepunkt haben und somit eher "ölig" sind oder ob sie einen niedrigeren Siedepunkt haben und somit eher wasserlöslich sich. Die Unterscheidungsgrenze wird bei einem Siedepunkt von etwa 100°C bei Standardbedingungen gezogen. Beispiele für "grössere" VOC sind etwa Terpen und Aromate. Beispiele für "kleinere" VOC sind Aldehyde und Alkohole.

Die Verminderung von VOC-Emissionen im Bereich Industrie und Gewerbe ist aus zweierlei Gründen wichtig. Zum einen aus gesundheitlichen Aspekten, denn VOC in der Umgebungsluft können bei Menschen bestimmte Symptome wie Kopfschmerzen, Überempfindlichkeitsreaktionen, Müdigkeit, Leistungsminderung, Schlafstörungen und Reizungen der Atemwege entwickeln, welche auch unter dem Begriff "Sick-Building-Syndrom" zusammengefasst werden. Zum anderen können VOC in industriell genutzten Gasgemischen zu Ausfällen, Schäden und Effizienzminderungen in Aufbereitungs- oder Einspeiseanlagen führen, welche sich schnell finanziell auswirken. Beispielsweise kondensieren Terpene auf der Membrananlage und reduzieren die Kapazität, während Ketone die Dichtungen beschädigen, wodurch die Wartungsintervalle kürzer werden und die Membranen früher und öfters ersetzt werden müssen. Deshalb wurden sowohl im Bereich der Abluftreinigung als auch in der Biogasaufbereitung spezielle Verfahren entwickelt, um VOC aus Gasgemischen abzutrennen.

Aus der DE 10158970 A1 ist etwa ein Verfahren bekannt, mit dem oxidierbare Stoffe bzw. VOC-Bestandteile aus einem Luftstrom, insbesondere aus Kabinenluft von Flugzeugen, entfernt werden können. Für die Luftstrom-Reinigung wird ein spezieller Schichtaufbau genutzt, in welchem ein Adsorber, Elektroden und eine Barriereschicht dazwischen als Baueinheit ausgebildet sind. Bei besagtem Schichtaufbau bilden zwei beabstandete Elektroden und eine dazwischenliegende Barriere eine Plasmaquelle mit einer dielektrischen Barrierenentladung.

Im Bereich der Abluftreinigung wurde ferner versucht, eine verbesserte VOC Entfernung mittels Nutzung von UV-Licht zur Erzeugung freier Radikale und/oder durch Verwendung spezieller mit metallischen Nanopartikeln dotierter, katalytisch aktiver Adsorbermaterialien zu erreichen.

Ein allgemeines Problem von VOC-Adsorbern ist deren limitierte Adsorptionskapazität oder Beladungshöhe. Insbesondere im Falle von "schwereren" VOC haften diese bevorzugt an der äussersten, bzw. von aussen leicht zugänglichen Adsorberoberfläche und erschweren dadurch das Eindringen weiterer VOC in den Poren bzw. deren Adsorption an der Oberfläche innerhalb der Poren des Adsorbers: Dies führt dazu, dass die theoretische Adsorptionskapazität je nach Zusammensetzung der VOC teilweise nicht annähernd ausgeschöpft werden kann und lediglich bei 10 - 30% liegt.

Es ist daher die Aufgabe der Erfindung, die Nachteile des Stands der Technik zu beseitigen und ein kosteneffizientes Verfahren zur effizienten Abtrennung von VOC aus einem durch Vergärung oder Pyrolyse von organischem Material erhaltenen Gasgemisch bereitzustellen.

Die Aufgabe wird erfindungsgemäss mit einem Verfahren gemäss Anspruch 1 und einer Vorrichtung gemäss Anspruch 13 gelöst. Bevorzugte Ausführungsformen der Erfindung sind in den abhängigen Ansprüchen wiedergegeben.

Im erfindungsgemässen Verfahren wird zunächst ein Gasgemisch bereitgestellt, welches
ein durch Pyrolyse von organischem Material erhaltenes Pyrolysegas mit einer Kohlenstoffmonoxid-Konzentration von mindestens 2 vol.-% und/oder
ein durch Vergärung von organischem Material erhaltenes methanhaltiges Biogas mit einer Methan-Konzentration von mindestens 40 vol.-%,
sowie mindestens eine Verunreinigung aus der Gruppe der flüchtigen organischen Verbindungen (VOC) enthält. Dem Gasgemisch wird erfindungsgemäss Ozon (O₃) beigemischt. Anschliessend wird das Gasgemisch zur Abtrennung der VOC mit einem Adsorber in Kontakt gebracht.

Das Verfahren der vorliegenden Erfindung eignet sich insbesondere zur Reinigung von fermentativ - beispielsweise in Biogasanlagen - erzeugten methanhaltigen Gas, das im Folgenden "methanhaltiges Biogas" genannt wird. Im Falle von solchem Biogas weist das Gasgemisch erfindungsgemäss einen Methangehalt von mindestens 40%, und bevorzugt mindestens 50%, auf (Prozentangaben im Gasgemisch beziehen sich - wie oben erwähnt - stets auf Volumenprozente).

Weiter kann das Gasgemisch auch aus der Pyrolyse von organischem Material stammen. In diesem Falle umfasst das Gasgemisch erfindungsgemäss eine Kohlenstoffmonoxid-konzentration von mindestens 2 vol.-%.

Im Sinne der Erfindung wird als Adsorber ein Stoff definiert, welcher VOC aus dem Gasgemisch binden (adsorbieren) kann. Als "Adsorption" wird hierbei ein Prozess verstanden, bei dem Stoffe (in der Regel Moleküle) auf der Oberfläche eines anderen Stoffes haften bleiben und sich auf dessen Oberfläche anreichern. Für die vorliegende Erfindung kann diese Anhaftung an der Adsorberoberfläche sowohl aufgrund chemischer Bindung (Chemisorption) als auch aufgrund physikalischer Anziehungskräfte (Physisorption) erfolgen. Als Adsorber können insbesondere Aktivkohle, Aktivkoks, Silicagel oder Molekularsiebe (Zeolithe) dienen.

Es wurde überraschenderweise gefunden, dass durch Zugabe von Ozon in das Gasgemisch die Adsorptionskapazität des Adsorbers deutlich erhöht werden kann. Konkret wurde festgestellt, dass die Vorbehandlung mit Ozon eine effizientere Beladung des Adsorbers mit VOC ermöglicht und insgesamt die Entfernung von VOC aus dem Gasgemisch erleichtert. Es wird vermutet, dass dieser Effekt darauf zurückzuführen ist, dass die VOC durch die Zugabe von Ozon vor ihrem Auftreffen auf den Adsorber partiell oxidiert werden. Die Oxidationsprodukte weisen einen höheren Siedepunkt als die Ausgangsstoffe auf. Dadurch werden die Oxidationsprodukte besser von dem Adsorber aufgenommen als die Ausgangsstoffe.

Das erfindungsgemässe Verfahren hat somit gegenüber dem Stand der Technik den Vorteil, dass durch die Vorbehandlung der im Gasgemisch enthaltenen VOC mit Ozon die Adsorption der VOC am Adsorber effizienter erfolgt. Dies hat wiederum zur Folge, dass der Adsorber weniger oft aufbereitet oder ausgetauscht werden muss und das Verfahren somit effizienter und kostengünstiger wird.

Sauerstoff und Ozon sind allgemein als brand- und explosionsfördernd bekannt. Entgegen der Erwartungen wurde allerdings gefunden, dass eine Ozonbeimischung auch bei Methan- oder Kohlenstoffmonoxid-haltigen Gasen gut handhabbar ist. Es wird vermutet, dass dies mindestens teilweise darauf zurückzuführen ist, dass Ozon bevorzugt mit den enthaltenen VOC reagiert und deshalb sehr rasch umgesetzt wird.

Für den Zweck der vorliegenden Erfindung wird idealerweise ein Adsorber verwendet, welcher VOC adsorbiert, während andere Gasbestandteile, insbesondere Methan, den Adsorber passieren können, ohne - oder zumindest nur geringfügig - adsorbiert zu werden. Per Definition ist somit die relative Konzentration von Methan im Gasgemisch nach dem Passieren des Adsorbers höher als vor dem Auftreffen auf den Adsorber.

Dem Fachmann ist bekannt, dass ein Adsorber nur eine gewisse Menge von VOC adsorbieren kann, bevor er gesättigt ist. Sobald die Adsorptionskapazität des Adsorbers auf ein vordefiniertes Schwellenwert gesunken ist, muss dieser regeneriert bzw. wiederaufbereitet oder ausgetauscht werden, um seine ursprüngliche Adsorptionskapazität wieder-herzustellen. Für das Herauslösen bzw. die Desorption der am Adsorber gebundenen Stoffe - hier vorwiegend VOC - sind mehrere Verfahren bekannt. Beispielsweise wird ein sog. Regenerationsgas durch den Adsorber geleitet, welches die gebundenen Stoffe von der Adsorberoberfläche löst und mitnimmt.

Bei dem methanhaltigen Biogas kann es sich insbesondere um Gas aus Biogasanlagen handeln, aber auch um Erdgas oder Deponiegas. Bevorzugt enthält es eine Methan-Konzentration von mindestens 50 vol.-% und besonders bevorzugt von mindestens 60 vol.-%.

Für das erfindungsgemässe Reinigungsverfahren liegt das methanhaltige Biogas vorzugsweise mit einer Temperatur von 10°C bis 30°C, bevorzugt bei Raumtemperatur vor.

Nach der Reinigung kann das Gasgemisch bevorzugt zum Betrieb von Verbrennungsanlagen wie Heizungen, Gasmotoren in Fahrzeugen oder Gasturbinen verwendet werden, oder im Falle von aufgewertetem methanhaltigen Biogas als Biomethan in ein Gasnetz eingespeist werden.

Wenn das erfindungsgemässe Verfahren zur Reinigung von Pyrolysegas verwendet wird, so enthält letzteres bevorzugt mindestens 5 vol.-% Kohlenstoffmonoxid.

Das Pyrolysegas kann ferner mindestens einen Bestandteil aus der Gruppe bestehend aus Wasserstoff, Kohlendioxid, Methan, Ethan, Propan, Ethen, höhere Kohlenwasserstoffe, Acetylen, Ammoniak und Propylen enthalten.

Im Falle von Pyrolysegas hat sich gezeigt, dass das Verfahren bei einer bevorzugten Temperatur von 5°C bis 60°C besonders effizient ist. Spezifisch bevorzugt wird hierbei eine Temperatur von ca. 40°C

In einer bevorzugten Ausführungsform werden Schwefelwasserstoffverbindungen aus dem Gasgemisch entfernt, bevor Ozon beigemischt wird. Die Entfernung von Schwefelwasserstoffverbindungen ist in der Regel unumgänglich, sobald diese in nennenswerter Konzentration in der Gasmischung enthalten sind, denn wie oben beschrieben können Schwefelwasserstoffe in Gasaufbereitungsanlagen zu Schwefelsäure reagieren und Korrosion an den Leitungen verursachen. Die Schwefelwasserstoffkonzentration wird bevorzugt auf unter 5 ppm reduziert. Weiter ist bevorzugt, dass die Schwefelwasserstoffe vor einer etwaigen Verflüssigung des Produktgases entfernt werden, da Schwefelwasserstoff in einer Verflüssigungsanlage je nach Anlagentyp ungewollt ist.

Bevorzugt wird vor oder nach der Adsorption der VOC zusätzlich CO₂ aus dem Gasgemisch abgetrennt. Bei der erfindungsgemässen Aufreinigung von methanhaltigen Gasgemischen werden bevorzugt nicht nur Schadstoffe aus dem Gasgemisch entfernt, sondern im Hinblick auf die Nutzung des gereinigten Produktgases als brennbarer Energieträger wird bevorzugt auch der Anteil an Methan als brennbarer Bestandteil im gereinigten Gasgemisch möglichst stark erhöht. Biogas enthält normalerweise einen variablen Anteil an CO₂. Da CO₂ nicht brennbar ist, wird es bevorzugt aus dem Gasgemisch entfernt, um dessen Energiedichte z.B. für die Einspeisung ins Erdgasnetz zu erhöhen. Im Sinne der Erfindung wird ein entschwefeltes Biogas nach der Abtrennung von CO₂ auch als Biomethan bezeichnet. Das Biomethan kann dabei immer noch VOC enthalten, welche je nachdem erst später abgetrennt werden. Wie bei den Schwefelwasserstoffen ist es auch für CO₂ bevorzugt, dass dieses vor einer etwaigen Verflüssigung entfernt wird. Ein Entfernen nach der Verflüssigung ist aufwändiger, da das CO₂ früher als das Produktgas ausfriert und aufgrund dessen die Kühleinheit beschädigen oder blockieren kann.

In einer bevorzugten Ausführungsform werden die VOC und Ammoniak (falls dieses noch vorhanden ist) nach der Ozonzugabe und vor dem Inkontaktbringen der VOC mit dem Adsorber, einem Nachbehandlungsschritt unterzogen, bevorzugt unter Verwendung eines Wäschers, eines Kühlwäschers oder eines Gaskühlers mit Kondensatabscheider. Durch diesen Schritt werden die wasserlöslichen VOC und Ammoniak vorgängig entfernt und der Adsorbers damit entlastet.

Bevorzugt umfasst der Adsorber Aktivkohle. Aktivkohle wird mitunter als Adsorptionsmittel zur Entfernung unerwünschter Farb-, Geschmacks- und Geruchsstoffe aus Gasen, Dämpfen und Flüssigkeiten eingesetzt. Ein großer Vorteil von Aktivkohlen besteht in ihrer thermischen Reaktivierbarkeit, dem tiefen Preis, der geringen Komplexität in der Herstellung und der universellen Verfügbarkeit. In der Praxis wird diese jedoch bevorzugt nicht wiederaufbereitet, sondern ersetzt und später als Abfall verbrannt. Aktivkohle hat sich zudem als hervorragender Adsorber für VOC erwiesen. Die mit VOC besetzte Aktivkohle kann je nach Umweltnorm als Düngemittel eingesetzt werden.

In einer bevorzugten Ausführungsform wird das Ozon dem Gasgemisch als Ozon-Sauerstoff-Mischung beigemischt. Bevorzugt liegt die Endkonzentration des Ozons im Gasgemisch bei 10 - 1000 ppm, besonders bevorzugt bei 20 - 500 ppm. Für die Oxidierung von VOC hat es sich als effizient erwiesen, eine Ozon-Sauerstoff-Mischung zu verwenden. Diese enthält bevorzugt 1% - 15% Ozon und 85% - 99% Sauerstoff, besonders bevorzugt 3% - 13% Ozon und 87% - 97% Sauerstoff und ganz besonders bevorzugt 5% - 10% Ozon und 90% - 95% Sauerstoff. Im Sinne der vorliegenden Erfindung wird als Sauerstoff immer ein O₂-Molekül definiert, was im Allgemeinen auch als molekularer Sauerstoff bekannt ist. Im Gegensatz dazu werden Sauerstoffradikale - auch als O˙ oder O* bekannt - im Sinne der Erfindung auch als solche bezeichnet, um sie von Ozon und Sauerstoff abzugrenzen.

Allgemein ist ein höherer Ozon-Gehalt in der oben erwähnten Ozon-Sauerstoff-Mischung zu bevorzugten. Für die vorliegende Erfindung ist ein Ozon-Gehalt von 20% bei 80% Sauerstoff die bevorzugte obere Grenze. Höhere Konzentrationen von Ozon in der Ozon-Sauerstoff-Mischung sind zwar technisch möglich, aber gegenwärtig aufgrund des zunehmenden Aufwands aus ökonomischer Sicht nicht bevorzugt.

Es hat sich gezeigt, dass eine optimale Oxidierung bei einer Ozon-Endkonzentration im Bereich von 10 - 1000 ppm und noch bevorzugter zwischen 20 - 500 ppm erreicht wird. Höhere Konzentrationen wären zwar durchaus denkbar, aus ökonomischer Sicht aber weniger bevorzugt. Als Endkonzentration ist hier die Konzentration von Ozon zum Zeitpunkt seiner Zugabe zum Gasgemisch definiert, also nach vollständiger Zugabe, aber unter der theoretischen Annahme, dass bis dahin noch kein Ozon mit Bestandteilen des Gasgemisches reagiert hat. Falls die Zusammensetzung des Gasgemisches bekannt ist, kann die Ozonkonzentration gegebenenfalls an die Konzentration der VOC im Gasgemisch angepasst werden.

Es ist weiter bevorzugt, dass die zugegebene Ozonmenge in einem stöchiometrischen Verhältnis bezüglich der im Gasgemisch enthaltenen oder erwarteten VOC-Konzentration zugegeben wird. Damit wird zum einen verhindert, dass sich das Gasgemisch unnötig mit Ozon und Sauerstoff anreichert und dadurch die Explosionsgefahr erhöht wird. Zum anderen soll der Adsorber möglichst nicht mit Ozon in Kontakt kommen. Die Oxidationsreaktionen von Ozon und Bestandteilen des Gasgemisches erfolgt normalerweise innert Sekunden oder gar Sekundenbruchteilen. Das Ozon wird bei der Oxidierung zu molekularem Sauerstoff reduziert, wobei das freiwerdende Sauerstoffradikal oxidierbare Substanzen - bevorzugt VOC - bindet und diese dabei oxidiert. Bei einem Überschuss an Ozon würde nicht alles Ozon abreagieren, bevor die Gasmischung zum Adsorber gelangt. Das restliche Ozon würde damit mit den oxidierten VOC zum Adsorber gelangen und könnte dort bereits vom Adsorber adsorbierte VOC lösen. Aus diesem Grund ist die Ozonkonzentration bevorzugt auf die enthaltene oder erwartete VOC-Menge im Gasgemisch abgestimmt und bevorzugt so bemessen, dass beim Auftreffen des Gasgemisches auf den Adsorber kein Ozon mehr im Gasgemisch vorhanden ist. Die Menge an VOC ist mitunter abhängig vom Ursprung des methanhaltigen Gasgemisches. Für fermentativ erzeugte Gase oder methanhaltige Gase natürlichen Ursprungs sind aber durchschnittliche Werte für VOC-Konzentrationen bekannt. Bei fermentativ erzeugten Gasen sind diese durchschnittlichen VOC-Konzentrationen zusätzlich anhand der Art des verwendeten Gärmaterials spezifiziert. Die Menge an zuzugebenden Ozon kann somit basierend auf solchen bekannten VOC-Durchschnittskonzentrationswerten bestimmt werden. Bevorzugt wird die enthaltene VOC-Konzentration und basierend darauf die zuzugebende Ozonmenge jedoch anhand von Referenzproben des Gasgemisches vor dessen Reinigung festgelegt.

In einer bevorzugten Ausführungsform beträgt die Zeitdauer zwischen dem Zeitpunkt der Beimischung des Ozons und dem Auftreffen der Gasmischung auf den Adsorber mindestens 1 Sekunde, vorzugsweise mindestens 4 Sekunden, und besonders bevorzugt 6 - 10 Sekunden. Wie oben beschrieben ist es erwünscht, dass alles Ozon mit den VOC reagiert hat, bevor das Gasgemisch auf den Adsorber trifft. Um zu verhindern, dass das Ozon an den Adsorber gelangt bevor es reagiert hat, ist der Reaktionsraum der VOC Oxidation bevorzugt vom Adsorber getrennt oder die VOC werden mit dem Ozon an einem Ende eines Reaktionsraums eingedüst, während der Adsorber am gegenüberliegenden Ende platziert wird. In der zweiten Variante ist die Dimension des Reaktionsraums folglich so bemessen, dass das Ozon mit den Bestandteilen im Gasgemisch möglichst vollständig reagiert hat, bevor es den Adsorber erreichen würde.

Weiter wird in einer bevorzugten Ausführungsform das Ozon in einem Ozongenerator vor Ort aus Luft erzeugt. Im Falle einer autarken Produktionsanalage ist es sehr vorteilhaft, wenn das Ozon aus der Aussenluft gewonnen werden kann und nicht reinen Sauerstoff als Vorstufe benötigt. Dies reduziert die Unterhaltsarbeiten der Anlage und ermöglicht eine Produktion an entlegenen Orten ohne Bereitstellen einer Quelle von reinem Sauerstoff. Dazu wird bevorzugt ein Sauerstoffkonzentrator vor Ort installiert, der aus der Luft den Sauerstoff filtert und dann an den Ozongenerator weitergibt.

Bevorzugt wird das Ozon alternativ in einem Ozongenerator aus Sauerstoff erzeugt. Eine Ozonproduktion mit möglichst reinem Sauerstoff als Vorstufe (Sauerstoffkonzentration von 90-95% sind bevorzugt) ermöglicht es das Ozon effizienter und in höherer Konzentration herzustellen. Die Nutzung von reinem Sauerstoff ist insbesondere an gut erschlossenen Lokalitäten sinnvoll, wo die Bereitstellung von reinem Sauerstoff unproblematisch ist.

In einem weiteren Aspekt betrifft die Erfindung eine Vorrichtung zur Reinigung eines Gasgemisches gemäss dem oben beschriebenen Verfahren. Besagte Vorrichtung umfasst erfindungsgemäss mindestens eine Gaszufuhrleitung, mindestens einen Reaktionsraum, mindestens einen Adsorber für VOC, eine Ozonquelle mit einer Ozonzufuhrleitung sowie eine Gasabfuhrleitung. Als Reaktionsraum kann hierbei ein beliebiger Raum, ein beliebiges Behältnis oder Gehäuse dienen, in welchem die VOC mit dem Ozon reagieren können. Der Reaktionsraum muss nicht zwingend allseitig abgetrennt sein - so wäre beispielsweise auch ein Rohrabschnitt als Reaktionsraum denkbar. Der Adsorber kann dabei im Reaktionsraum angebracht werden, wird aber bevorzugt von diesem separiert. Eine oben beschriebene erfindungsgemässe Vorrichtung hat gegenüber dem Stand der Technik den Vorteil, dass durch die Behandlung der VOC mit Ozon die Adsorption der VOC am Adsorber effizienter ist und dieser somit weniger oft aufbereitet oder ausgetauscht werden muss. Dadurch kann die Vorrichtung insgesamt effizienter und kostengünstiger betrieben werden.

Bevorzugt ist der Reaktionsraum der Vorrichtung mit Füllkörpern gefüllt. Dies ermöglicht eine effiziente Durchmischung des Gases oder verschiedener Gasströme im Reaktionsraum und ermöglicht somit eine effiziente Oxidation der VOC durch das Ozon.

Bevorzugt ist die Vorrichtung modular aufgebaut und für die Nachrüstung bestehender Gasreinigungsanlagen geeignet. Als modulare Vorrichtung ist in diesem Zusammenhang eine Vorrichtung definiert, bei der die oben beschriebenen Komponenten der Vorrichtung vorab oder vor Ort zusammengesetzt und auf bestehende Anlagen aufgerüstet werden können. Dies hat den Vorteil, dass ein defektes Modul kostengünstig und unkompliziert ausgetauscht werden kann. Weiter hat eine modulare Vorrichtung den Vorteil, dass bestehende Anlagen kostengünstig nachgerüstet werden können, anstatt kostenintensiv umgebaut oder ersetzt zu werden. Die modulare Bauweise der Vorrichtung steigert somit deren Wirtschaftlichkeit.

In einer bevorzugten Ausführungsform ist die Ozonquelle ein Ozongenerator, welcher über die Ozonzufuhrleitung mit dem Reaktionsraum verbunden ist. Der Ozongenerator kann bei Bedarf auch von der Vorrichtung beabstandet platziert werden. Eine solche separate Positionierung des Ozongenerators ist insbesondere dann sinnvoll, wenn Platzprobleme oder andere Ursachen ein direktes Montieren auf der Anlage verunmöglichen.

Im Folgenden wird die Erfindung anhand eines in der beigefügten dargestellten Ausführungsbeispiels näher erläutert. Es zeigen jeweils rein schematisch:
- Fig. 1: eine schematische Darstellung einer bevorzugten Ausführungsform des erfindungsgemässen Verfahrens zur Aufreinigung eines Gasgemisches umfassend ein methanhaltiges Biogas; und
- Fig. 2: eine schematische Darstellung einer alternativen vereinfachten Ausführungsform des erfindungsgemässen Verfahrens zur Aufreinigung eines Gasgemisches umfassend ein methanhaltiges Biogas.

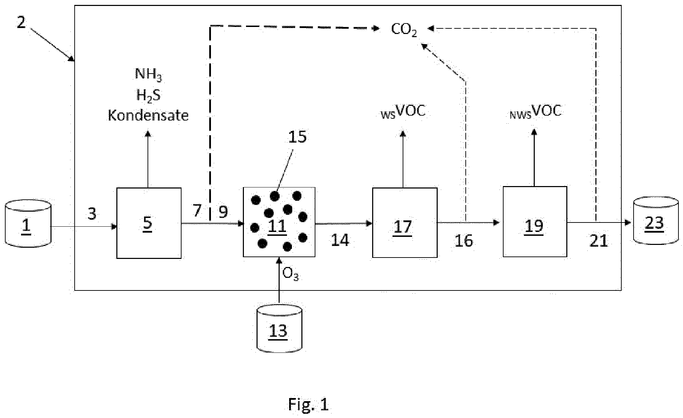

Bei der in Fig. 1 schematisch dargestellten bevorzugten Ausführungsform des erfindungsgemässen Verfahrens wird aus einer Gasquelle 1 Rohgas 3 entnommen und in eine Gasaufbereitungsanlage 2 eingebracht. In der Gasaufbereitungsanlage 2 wird das Rohgas 3 zunächst in eine Vorbehandlungskammer 5 geleitet, wo das Rohgas 3 gekühlt, um im Sinne einer Vorbehandlung Kondensate und Ammoniak zu entfernen. Anschliessend wird das Rohgas 3 auf 0.1 bar (g) komprimiert und weiter vorbehandelt, indem es mittels speziell dotierter Aktivkohle (meist KI, K₂CO₃, KMnO₄) entschwefelt, bzw. Schwefelwasserstoffe (H₂S) entfernt werden. Eine Entschwefelung ist alternativ auch mittels biologischer oder chemischer Verfahren möglich. Weiter kann eine zusätzliche Feinentschwefelung mit einem nachgeschalteten Aktivkohlefilter durchgeführt werden (nicht gezeigt).

Nach der Vorbehandlung wird ein vorbehandeltes, entschwefeltes Gas 7 erhalten, wobei dies nicht bedeutet, dass das vorbehandelte Gas 7 komplett frei ist von Schwefelverbindungen und insbesondere nicht ausschliesst, dass das entschwefelte Gas noch schwefelhaltige VOC enthält. Das entschwefelte Gas 7 umfasst zu diesem Zeitpunkt noch mindestens VOC und CO₂ als Verunreinigung, die zum Erhalt von verwertbarem Biomethan als Produktgas aus der Gasmischung entfernt werden müssen. Je nach Prozessablauf kann das CO₂ vor, während oder nach der Entfernung der VOC abgetrennt werden (gestrichelte Pfeile). Die Entfernung von CO₂ wird auch als "Upgrading" bezeichnet, da sich dadurch die relative Methankonzentration im Gasgemisch normalerweise deutlich erhöht. Das Upgrading kann in dem Fachmann bekannter Weise mittels Membranseparation, Aminwäsche und/oder Nutzung einer PTSA erfolgen. Bevorzugt wird der CO₂-Gehalt auf unter 2% reduziert.

In der dargestellten bevorzugten Ausführungsform wird das CO₂ bevorzugt vor der VOC-Entfernung abgetrennt. Nach der Entfernung von CO₂ wird vorliegend von einem methanangereicherten Gas 9 gesprochen, welches in der Regel als Energieträger bzw. als Brennmaterial genutzt werden kann. Der Umstand, dass dieses Gas noch VOC enthält, spielt im Falle einer Verbrennung keine Rolle, sofern besagte Energieumwandlung nicht in sensitiven Anlagen, etwa Brennstoffzellen, erfolgt. Für den Fall, dass es sich bei dem Rohgas 3 um ein Rohbiogas handelt, wird das methanangereicherte Gas 9 auch als Biomethan bezeichnet.

In der gezeigten Ausführungsform wird das methan-angereicherte Gas 9 zur Abtrennung der VOC in einen Reaktionsraum 11 eingebracht, wo es mit Ozon (O₃) aus einer Ozonquelle 13 gemischt wird. Der Reaktionsraum 11 umfasst dabei Füllkörper 15, welche ein Vermischen des Gases 9 mit dem Ozon fördern. Sobald das Ozon mit den VOC im Gasgemisch in Kontakt kommt, finden Oxidationsreaktionen statt, bei welchen das Ozon reduziert und die VOC oxidiert werden, und im Zuge dessen Sauerstoff (O₂) entsteht. Die Oxidationsreaktion dauert in der Regel weniger als 10 Sekunden. Im Zuge der Oxidation der VOC werden diese mindestens teilweise in "kleinere" VOC-Bestandteile aufgespalten. Dadurch verändern sich auch die physikalischen und chemischen Eigenschaften der VOC. Die nach der Oxidation erhaltenen VOC-Teile können anhand dieser Eigenschaften in verschiedene Fraktionen eingeteilt werden, etwa in wasserlösliche VOC (water soluble VOC, kurz wsVOC) und nicht-wasserlösliche VOC (non-water soluble VOC, kurz _{NWS}VOC). Der Vollständigkeit halber sei erwähnt, dass die Veränderung der physikalischen und chemischen Eigenschaften der VOC bereits durch die Oxidation selbst - also aufgrund der Anbindung eines Sauerstoffatoms - erfolgen kann. Es ist ferner auch möglich, dass ein VOC-Molekül mehrfach oxidiert wird. Nach erfolgter Oxidation wird ein oxidiertes Gas 14 erhalten.

Das oxidierte Gas 14 mit den verschiedenen VOC-Fraktionen wird nach der Oxidation mittels eines Wäschers, Kühlwäschers oder Gaskühlers mit Kondensatabscheider 17 gereinigt, wodurch die wsVOC und leicht kondensierende Gase entfernt werden und ein gewaschenes Gas 16 erhalten wird. Anschliessend wird das gewaschene Gas 16 zu einem Adsorber 19 (bevorzugt Aktivkohle) geleitet, welcher die _{NWS}VOC adsorbiert und gereinigtes methanangereichertes Produktgas 21 passieren lässt. Das methanangereicherte Produktgas 21 kann anschliessend zu einer Gasverflüssigungsanlage 23 geleitet werden, wo es verflüssigt wird, um es Transport bereit und/oder lagerfähig zu machen. Je nach Zusammensetzung des Rohgases 3 kann die Art und/oder Abfolge der Reinigungsschritte in der Gasaufbereitungsanlage 2 verändert werden, sodass auch andere Verunreinigungen entfernt werden können.

Die gestrichelten Pfeile ausgehend vom gewaschenen Gas 16 bzw. Produktgas 21 zeigen an, dass die CO₂-Entfernung auch erst an diesen Stellen erfolgen kann - anstatt vor Einleiten des entschwefelten Gases 7 in den Reaktionsraum 11.

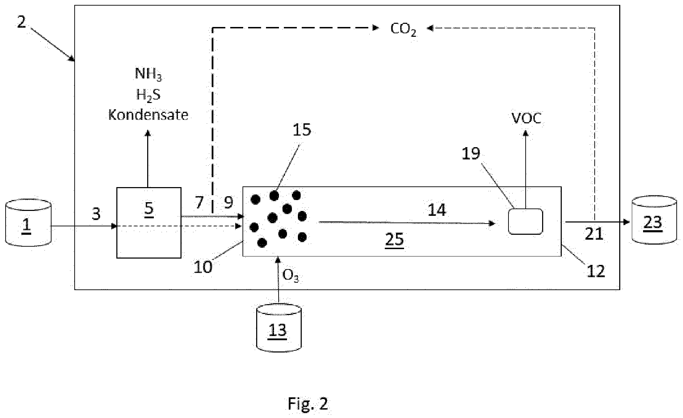

Bei der in Fig. 2 schematisch dargestellten alternativen, vereinfachten Ausführungsform sind lediglich die Kernschritte des erfindungsgemässen Verfahrens dargestellt. Analog zu der in Fig. 1 gezeigten Ausführungsform kann das Methan und VOC enthaltende Rohgas 3 aus einer Rohgasquelle 1 in eine Gasaufbereitungsanlage 2 eingespeist und optional in einer Vorbehandlungskammer 5 vorbehandelt werden. Das Rohgas 3 (oder im Falle einer Vorbehandlung das entschwefelte Rohgas 7 bzw. im CO₂-Gehalt reduzierte Gas 9) wird in einen Reaktionsraum 25 geleitet, welcher an einem vorderen Ende 10 mit Füllkörpern 15 gefüllt ist. Am vorderen Ende 10 des Reaktionsraums 25 wird Ozon (O₃) aus einer Ozonquelle 13 eingedüst, welches sich mit dem Gas 3 (oder 7/9) mischt. Das Ozon reagiert im Bereich der Füllkörper 15 mit den im Gas 3 (7/9) enthaltenen VOC, wodurch diese oxidiert werden. Währenddessen fliesst das Gas-Ozon-Gemisch 14 vom vorderen Ende zu einem hinteren Ende 12 des Reaktionsraums 25, in welchem sich ein Adsorber 19 befindet. Am Adsorber 19 werden die VOC adsorbiert, wodurch ein gereinigtes, methanangereichertes Produktgas 21 erhalten wird.

Analog zu Fig. 1 kann eine gegebenenfalls stattfindende CO₂ Abtrennung vor Eintritt in den Reaktionsraum 25 oder nach Austritt aus dem Reaktionsraum 25 erfolgen (gestrichelte Pfeile).

Das nach der Reinigung erhaltene, mit Methan angereicherte Produktgas 21 kann bei Bedarf - zumindest teilweise - auch in der Anlage selber direkt als Energieträger genutzt werden. Es kann beispielsweise in eine integrierte oder von der Gasaufbereitungsanlage getrennte Wärmekraftmaschine geleitet werden, wo Energie erzeugt wird, die wiederum zum Betreiben der einzelnen Komponenten genutzt werden kann. Energie wird insbesondere von Kompressoreinheiten benötigt, die für die Kühlung und/oder Kompression des Gases an diversen Stellen der Gasaufbereitungsanlage standardmässig genutzt werden.

Abschliessend sei erwähnt, dass die Ozonquelle 13 in den gezeigten Ausführungsformen zwar als externe Quelle dargestellt ist, dies aber auch anders gelöst sein kann. Die Ozonquelle kann beispielsweise ein Ozongenerator sein, welcher im Sinne eines Zusatzmoduls nachträglich an bestehende Gasaufbereitungsanlagen angeschlossen wird. Bei neu gebauten Anlagen kann eine solche Ozonquelle auch von Beginn weg in die Aufbereitungsanlage integriert werden.

Das oben beschriebene Verfahren lässt sich erfindungsgemäss nicht nur auf methanhaltiges Biogas sondern auch auf Pyrolysegas - also ein aus der Pyrolyse von organischem Material erhaltenen Gasgemisch - anwenden.

## Patentansprüche

1. Verfahren zur Reinigung eines Gasgemisches umfassend
ein durch Pyrolyse von organischem Material erhaltenes Pyrolysegas mit einer Kohlenstoffmonoxid-Konzentration von mindestens 2 vol.-% und/oder
ein durch Vergärung von organischem Material erhaltenes methanhaltiges Biogas (3, 7) mit einer Methan-Konzentration von mindestens 40 vol.-%,
sowie mindestens eine Verunreinigung aus der Gruppe der flüchtigen organischen Verbindungen (VOC),
wobei das Gasgemisch zur Abtrennung von VOC mit einem Adsorber (19) in Kontakt gebracht wird,
wobei dem Gasgemisch vor dem Inkontaktbringen mit dem Adsorber (19) Ozon (O₃) beigemischt wird.

2. Verfahren gemäss Anspruch 1, **dadurch gekennzeichnet, dass** das methanhaltige Biogas (3, 7) eine Methan-Konzentration von mindestens 50 vol.-%, bevorzugt von mindestens 60 vol.-%, aufweist.

3. Verfahren gemäss einem der Ansprüche 1 oder 2, **dadurch gekennzeichnet, dass** das methanhaltige Biogas (3, 7) mit einer Temperatur von 10°C - 30°C, bevorzugt bei Raumtemperatur, vorliegt.

4. Verfahren gemäss Anspruch 1, **dadurch gekennzeichnet, dass** das Pyrolysegas mindestens 5 vol.-% Kohlenstoffmonoxid enthält.

5. Verfahren gemäss einem der Ansprüche 1 und 4, **dadurch gekennzeichnet, dass** das Pyrolysegas ferner mindestens einen Bestandteil aus der Gruppe bestehend aus Wasserstoff, Kohlendioxid, Methan, Ethan, Propan, Ethen, höhere Kohlenwasserstoffe, Acetylen, Ammoniak und Propylen.

6. Verfahren gemäss einem der Ansprüche 1, 4 und 5, **dadurch gekennzeichnet, dass** das Pyrolysegas mit einer Temperatur von 5°C bis 60°C, bevorzugt ca. 40°C, vorliegt.

7. Verfahren gemäss einem der Ansprüche 1 bis 6, **dadurch gekennzeichnet, dass** vor oder nach der Adsorption der VOC zusätzlich CO₂ aus dem Gasgemisch abgetrennt wird.

8. Verfahren gemäss einem der Ansprüche 1 bis 7, **dadurch gekennzeichnet, dass** das Gasgemisch vor dem Inkontaktbringen der VOC mit dem Adsorber (19) einem Nachbehandlungsschritt (17) unterzogen wird, bevorzugt unter Verwendung eines Wäschers, eines Kühlwäschers oder eines Gaskühlers mit Kondensatabscheider.

9. Verfahren gemäss einem der Ansprüche 1 bis 8, **dadurch gekennzeichnet, dass** der Adsorber (19) Aktivkohle umfasst.

10. Verfahren gemäss einem der Ansprüche 1 bis 9, **dadurch gekennzeichnet, dass** das Ozon dem Gasgemisch als Ozon-Sauerstoff-Mischung beigemischt wird.

11. Verfahren gemäss einem der Ansprüche 1 bis 10, **dadurch gekennzeichnet, dass** die Endkonzentration des Ozons im Gasgemisch (3, 7, 9) bei 10 - 1000 ppm, bevorzugt bei 20 - 500 ppm, liegt.

12. Verfahren gemäss einem der Ansprüche 1 bis 11, **dadurch gekennzeichnet, dass** das Ozon in einem Ozongenerator (13) vor Ort aus Luft oder in einem Ozongenerator (13) aus Sauerstoff, bevorzugt aus aufkonzentriertem Luftsauerstoff, erzeugt wird.

13. Vorrichtung zur Reinigung eines Gasgemisches gemäss dem Verfahren der Ansprüche 1 bis 12, umfassend mindestens eine Gaszufuhrleitung, die an eine Gasquelle (1) angeschlossen ist, mindestens einen Reaktionsraum (11), mindestens einen Adsorber (19) für VOC, eine Ozonquelle (13) mit einer Ozonzufuhrleitung sowie eine Gasabfuhrleitung.

14. Vorrichtung gemäss Anspruch 13, **dadurch gekennzeichnet, dass** die Vorrichtung modular aufgebaut ist und für die Nachrüstung bestehender Gasreinigungsanlagen geeignet ist.

15. Vorrichtung gemäss einem der Ansprüche 13 oder 14, **dadurch gekennzeichnet, dass** die Ozonquelle (13) ein Ozongenerator ist, welcher über die Ozonzufuhrleitung mit dem Reaktionsraum (11) verbunden ist.
